# EUROPÄISCHE PATENTSCHRIFT

(11) **EP 1 045 415 B1**
(45) Veröffentlichungstag und Bekanntmachung des Hinweises auf die Patenterteilung: **22.09.2004**
(21) Anmeldenummer: 00107215.6
(22) Anmeldetag: 01.04.2000
(51) Int. Cl.: H01H 39/00

(54) **Kurzschliesser**
Short-circuiter
Court-circuiteur

(30) Priorität: 12.04.1999 DE 19916328
(43) Veröffentlichungstag der Anmeldung: 18.10.2000
(73) Patentinhaber: Moeller GmbH, 53115 Bonn (DE)
(72) Erfinder: Thilker, Lutz, 42799 Leichlingen (DE); Erven, Wolfgang, 53332 Bornheim (DE); Zacharias, Albert, 56566 Neuwied (DE); Daube, Thomas, 47057 Duisburg (DE)

(56) Entgegenhaltungen:
- DE-A- 19 712 387
- DE-A- 19 746 813
- DE-U- 9 419 141
- GB-A- 988 540

## Beschreibung

Die Erfindung betrifft ein Kurzschließer nach dem Oberbegriff des Anspruches 1.

Aus der DE 197 12 387 A1 ist ein Kurzschließer mit Anschlußschienen und einer Verbindungsschiene bekannt, der mit einem Kurzschließerkolben und einem Gasgenerator versehen ist. Bei Löschung von Störlichtbögen in Energienerteilungsanlagen versucht man möglichst schnell einen Kurzschluß herbeizuführen. Aus Gründen der Isolierung sind dort die zu verbindenden Stromschienen relativ weit beabstandet, was sich nachteilig auf die Schaltzeit auswirkt.
Der Kurzschließerkolben und die Stromschienen müssen relativ genau angeordnet werden, damit eine sichere Funktion gewährleistet ist. Bei der in der Fig. 11 gezeigten Anordnung besteht die Gefahr, daß die Bohrungen, in der der Kurzschließerkolben geführt bzw. eingeführt werden soll nicht genau zueinander fluchten.

Der Kurzschließer, der in der deutschen Gebrauchsmusterschrift 9419141 gezeigt und beschrieben ist beinhaltet ein Druckelement bzw. eine Explosionsladung und eine Isoliermembran, die von einem Kurzschließerkolben durchstoßen wird. Die Isoliermembran wirkt sich vorteilhaft auf die Isolierung auf. Die Zentrierung beider kurzzuschließenden Teile wird mit einem Ring 21 realisiert. Diese Lösung bezieht sich jedoch nur auf rotationssymetrische Teile.

Aufgabe der Erfindung ist es, einen Kurzschließer nach dem Oberbegriff des Anspruches 1 zu schaffen, der leicht montierbar ist und bei dem die Schienen genau zueinander montiert werden können und gut voneinander isoliert sind.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Dadurch daß zwischen der Anschlußschiene und der Stromschiene eine Isolierfolie angeordnet ist, die ein Loch aufweist, das größer als der Durchmesser des Druckelementes ist, und in das das Zentrierelement eingesetzt werden kann, können einerseits Luft und Kriechstecken bei unkomplizierter Montage und relativ kleinem Schienenabstand erhöht werden, ohne daß die Isolierfolie durchstoßen werden muß.

Wenn das Zentrierteil aus einer ringförmigen Hülse, die größer als der Durchmesser des Kurzschließelements ist, besteht und das Zentrierteil ein an der Hülse radial nach außen angeformter Isolierkragen aufweist, dann wird die Zentner- und Isolationseigenschaft des Zentrierteils weiter verbessert.

Von besonderem Vorteil ist es, wenn die Isoliermembrane mit einer Sollbruchstelle versehen ist, weil dann ein definierter und leichter Abriß der Isoliermembrane erfolgen kann.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine perspektivische auseinandergezogene Darstellung des Kurzschließers,
- Fig. 2: eine Schnittdarstellung des Kurzschließers,
- Fig. 3: eine vergrößerte Schnittdarstellung,

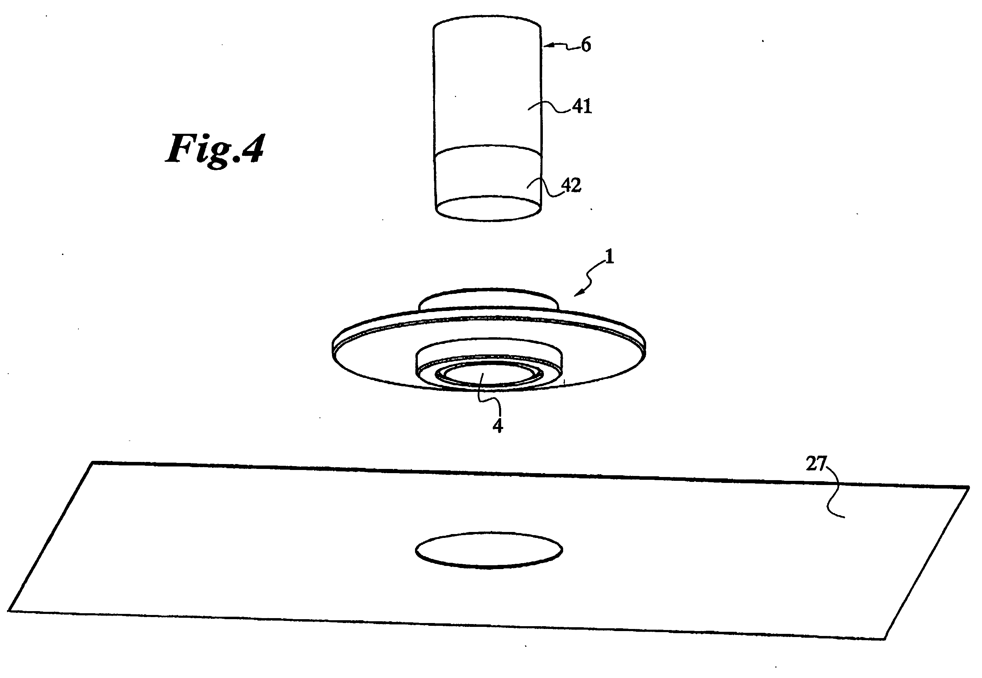

- Fig. 4: eine perspektivische auseinandergezogene Darstellung des Kurzschließerkolbens, des Zentrierelementes und der Isolierfolie von unten und

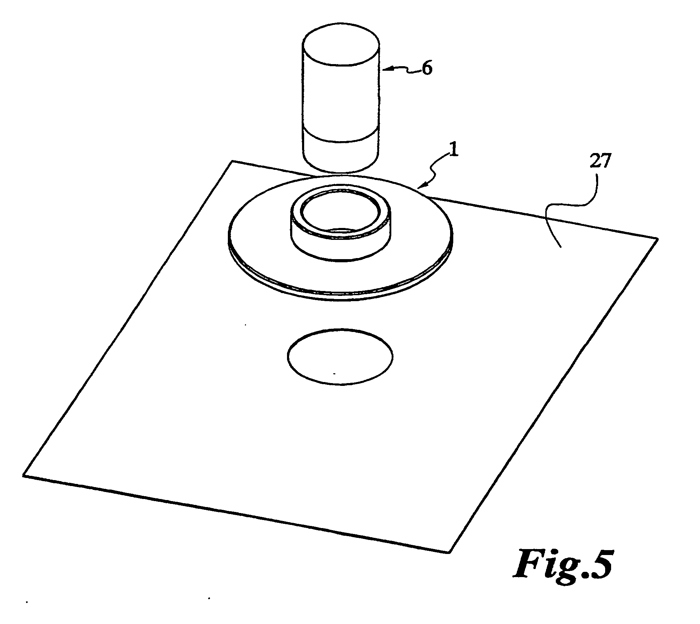

- Fig. 5: eine perspektivische auseinandergezogene Darstellung des Kurzschließerkolbens, des Zentrierelementes und der Isolierfolie von oben.

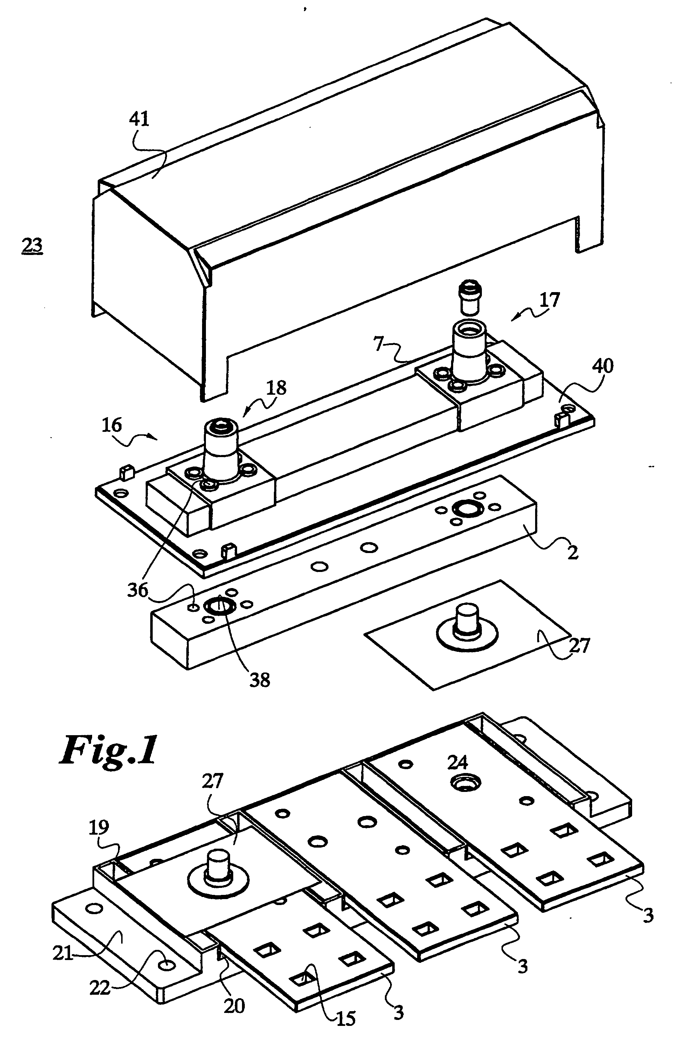

Die Fig. 1 zeigt den anschlußfertigen Kurzschließer 23 mit drei flach nebeneinander angeordneten Anschlußschienen 3 in Form von Flachschienen mit entsprechenden Anschlußbohrungen 15, wie sie in dem Niederspannungs-Anlagenbau üblich sind.

Die mittlere Anschlußschiene 3 ist am Ende, bzw. am gegenüberliegenden Ende der Anschlußbohrungen 15, mit einer Verbindungsschiene 2 elektrisch verbunden, wobei die Verbindungsschiene 2 im nichtausgelösten Zustand von den Anschlußschienen 3, isoliert ist. Die Schienenanordnung ist E-förmig.

An den Enden der Anschlußschienen 3 sind zwei Kurzschließereinheiten 16, 17 mit jeweils einem Gasgeneratorantrieb auf Nitrocellulose-Basis angeordnet, wie er bei Airbags oder Gurtstraffem verwendet wird.

Die Anschlußschienen 3, die Verbindungsschiene 2 und weitere später beschriebene Isolierteile sind zu einem sandwichartigen E-förmigen Paket angeordnet.

Bei Zündung der Kurzschließereinheiten 16 und 17 entsteht ein dreipoliger Kurzschluß, der innerhalb einer Millisekunde einen Störlichtbogen löscht.
Die Kurzschließereinheiten 16 und 17 werden durch eine Auswerteelektonik angesteuert, die mit schnellen Strom- und Lichtsensoren zur Störlichtbogenerkennung versehen ist. Die Ansteuerung kann mit jeder Art von Sensoren erfolgen. Ebenso ist der Kurzschließer zum Schutz von Verbrauchern und Betriebsmittel bei Kurzschluß einsetzbar.

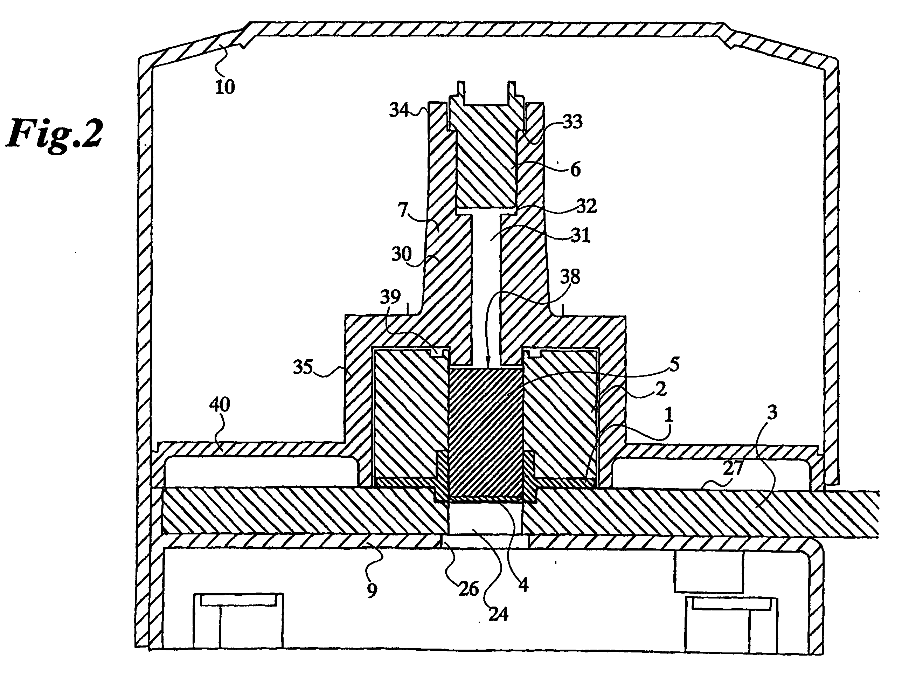

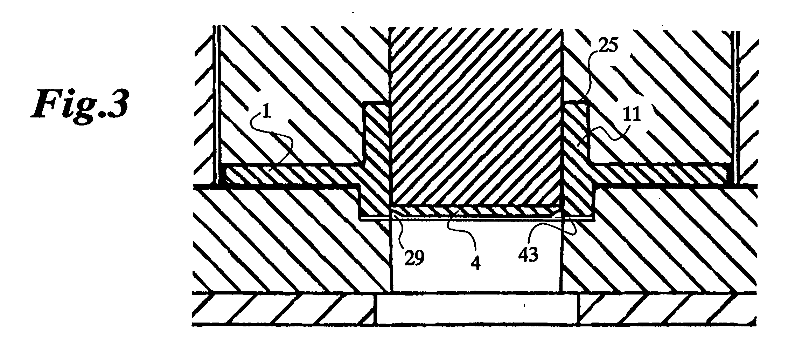

In der Fig. 2 ist eine Schnittdarstellung der Kurzschließereinheit gezeigt, wobei Fig. 3 eine Vergrößerung zeigt.

Die Kurzschließereinheit 16 bzw. 17 besteht aus einem Gasgenerator 6, einer Kapselung 18 aus Isolierstoff für den Gasgenerator 6 mit einer nicht dargestellten Überwurfmutter.
Der Gasgenerator 6 ist in der Kapselung 18 gasdicht eingebettet.

Die Anschlußschienen 3 sind in einem Unterteil 9 aus Isolierstoff eingebettet und mit diesem Teil verschraubt. Das Unterteil 9 weist Einsenkungen 19, die etwa die gleiche Tiefe aufweisen wie die Dicke der Anschlußschienen 3. An einer Seite des Unterteils 9 sind Öffnungen 20 für die Durchführung der Anschlußschienen angeordnet, wie in Fig. 1 zu sehen ist.
An beiden Seiten des Unterteils 9, d.h. links und rechts von den Anschlußschienen 3 sind Befestigungsflansche 21 mit Befestigungsbohrungen 22 angeformt, die zur Befestigung des Kurzschließers 23 in einer Schaltanlage vorgesehen sind.

Die beiden äußeren Anschlußschienen sind im Bereich der Kurzschließereinheiten 16,17 mit einer Anschlußschienenbohrung 24 versehen, die eine Phase 25 für ein Zentrierelement 1 aufweisen.
Direkt unterhalb der Anschlußschienenbohrung 24 ist das Unterteil 9 mit einer Unterteilbohrung 26 versehen, die einen etwas größerer Durchmesser als die Anschlußschienenbohrung 24 aufweist.

Auf der rechten und der linken Anschlußschiene 3 liegt eine dünne Isolierfolie 27 auf, die breiter als die Anschlußschienenbreite ist und ein Folienloch 28 aufweist, durch das ein Zentrienelement 1 eingesetzt werden kann.

Der Kurzschließer weist ein Zentrierelement 1 aus Isoliermaterial zur Zentrierung von einer Anschlußschiene 3 mit einer Verbindungschiene 2 auf.
Das Zentrierelement 1 weist eine Isoliermembran 4 auf, die bei Zündung des Druckelements 6 von einem Kurzschließerkolben 5 bzw. Zentierelement durchstoßen wird.

Zwischen der Anschlußschiene 3 und der Stromschiene 2 ist eine Isolierfolie 27 angeordnet ist, die ein Folienloch aufweist, das größer als der Durchmesser des Kurzschließerkolbens 5 ist und in das das Zentierelement 1 eingesetzt werden kann.

Das Zentrierteil 1 besteht aus einer ringförmigen Hülse 11, die größer als der Durchmesser des Kurzschließerkolbens 5 ist, besteht. Das Zentrierteil 1 weist einen an der Hülse 11 radial nach außen angeformten Isolierkragen auf.

Die Isoliermembrane 4 ist mit einer Sollbruchstelle 29 versehen, wie in Fig. 3 dargestellt ist.

Ein Halteteil 7 weist einen kaminartigen ersten Bereich 30 auf, in dem der Gasgenerator 6 gehalten ist. In diesem ersten Bereich 30 ist ein Vorvolumen 31 in der Art eines Kaminschachtes angeordnet.

Der Gasgenerator 6 ist in dem oberen Teil des ersten Bereichs in einer zylindrischen Aufnahme 32 eingebettet, die einen größeren Durchmesser aufweist als der Bereich des Vorvolumens 31.
Der erste Bereich ist mit einer Haltephase 33 versehen, an der sich des Gasgenerator 6 abstüzt und gegen diese durch eine nicht näher gezeigte Überwurfmutter gedrückt wird, ähnlich wie in der DE 19746815 (Fig. 3, Bezugszeichen 13) gezeigt ist.
Mit dem Bezugszeichen 34 ist das hierfür erforderliche Gewinde angedeutet.

Das Vorvolumen 31 beträgt ca. 1 cm³ , wobei der Gasgenerator 6 für dieses Volumen optimiert ist.

Der zweite Bereich 35 ist für die Halterung und Isolierung der Verbindungsschiene 2 vorgesehen und ist wie ein Isoliermantel über der Verbindungschiene 2 übergestülpt und mit dieser durch Schraubenverbindungen 36 verbunden.
Die Verbindungsschiene 2 ist relativ hoch. Die Höhe beträgt etwa zwei Drittel der Breite, damit der Kurzschließerkolben 5 nahezu vollständig in der Verbindungsschiene eingebettet werden kann.

In einem zweiten Bereich 35 ist ein runder Kragen angeformt, der in eine Durchgangsbohrung 38 der Verbindungsschiene 2 hineinragt, wobei der Kurzschließerkolben 5 in dieser Durchgangsbohrung 38 angeordnet ist.

Durch den Kragen sind die Gase gasdicht eingeschlossen, wobei auch eine Dichtung an hierfür vorgesehenen Rillen 39 eingesetzt werden kann.
Der zweite Bereich 35 erstreckt sich bis zu den Anschlußschienen 3.
Um den zweiten Bereich 35 ist ein rechteckförmiger dritter Bereich 40, wie ein Schirm, angeordnet, welcher die Anschlußschienen 3 isolierend abschirmt und fast die Gehäuseabmessung erreicht.
Das Unterteil 9 und die Anschlußschienen 3 bilden mit der querliegenden Verbindungsschiene 2 und dem Halteteil 7 ein sandwichartiges Paket.
Über diesem Paket ist um den dritten Bereich 40 die Haube 10 angeordnet. Sie bildet zusammen mit dem Paket ein Gehäuse, in dem die Anschlußstecker und die Leitungen für Gasgeneratoren geschützt angeordnet sind. Die Anschlußstecker sind direkt unter der Haube 10 angeordnet (nicht dargestellt), damit sie nicht gegen ein ungewolltes herausziehen geschützt sind. Die Haube 10 ist weiterhin mit einer Kabeldurchführung und Zugentlastung für die Gasgeneratorleitung versehen.

Quer über den beiden äußeren Anschlußschienen 3 ist jeweils eine dünne Isolierfolie 27 zur Isolation der Verbindungsschiene 2 mit den beiden äußeren Anschlußschienen 3 angeordnet. Die mittlere Anschlußschiene 3 ist, wie bereits beschrieben, elektrisch mit der Verbindungsschiene 2 verbunden, um einen Kurzschluß zwischen den beiden äußeren Phasen herbeizuführen.

Der Kurzschließerkolben 5 ist in einer Verbindungsschiene 2 geführt und gehalten, wobei der Gasgenerator 6 in dem ein Vorvolumen 31 aufweisendes Halteteil 7 aus Isoliermaterial eingebettet ist, das direkt mit der Stromschiene 2 befestigt ist.

Der Kurzschließerkolben 5 wird an dem einen Ende von dem Halteteil 7 und an dem anderen Ende von einem Zentrierelement 1 aus isoliermaterial gehalten, wobei das Zentrierelement 1 zwischen der Verbindungsschiene 2 und einer Anschlußschiene 3 angeordnet ist.

Das Zentrierteil 1 besteht aus einer Hülse 11, einer Isoliermembrane 4 mit der Sollbruchstelle 29 und einem an der Hülse 11 radial nach außen angeformten Isolierkragen 12.

Das Vorvolumen 31 beträgt etwa 1 cm³, wobei der Gasdruck des Gasgenerators mindestens 500 bar beträgt.

Der Kurzschließer weist mindestens einen Unterteil 9 aus Isolierstoff auf, in dem die Anschlußschienen 3 eingebettet und befestigt sind, d.h. daß auch zwei Unterteile bzw. zwei Gehäuse vorhanden sein können, die jeweils eine Gasgeneratoreinheit 16,17 aufweisen.

Das Halteteil 7 besteht vollständig aus Isoliermaterial. Die Verbindungsschiene 2 ist in dem Halteteil 7 eingebettet und befestigt, wobei das Unterteil 9 mit dem Halteteil 7 derart befestigt sind, daß mindestens ein isolierendes Kurzschließergehäuse entsteht. Das Halteteil 7 ist mit einer Haube 10 versehen.

Der Kurzschließerkolben 6 weist einen zylindrischen Bereich 41 und vorne einen leicht konischen Bereich 42.
Durch das Zentrierelement 1 sind die Anschlußschienenbohrung 24 und die Durchgangsbohrung 38 der Verbindungschiene 2 genau fluchtend.
Durch die Fase 25 der Verbindungsschiene 2 und die Anschlußschienenfase 43, in der die Hülse 11 liegt, wird eine durchgehende Bohrung geschaffen, die nur durch die Isoliermembrane 4 unterbrochen ist. Nach dem Abreißen der Isoliermembrane 4 kann der Kurzschließerkolben 6 ungehindert die Anschlußschiene kontaktieren, bis sich dieser dort festsetzt, weil entweder die Anschlußschienenbohrung ebenfalls konisch ist oder der Durchmesser kleiner ist als der zylindrische Bereich 41.

Der Kurzschließerkolben 6 ist lediglich um die sehr dünne Isoliermembran entfernt, was zu einer sehr kurzen Schaltzeit führt.
Das Zentrierelement 1 wirkt wie eine fingerhutartige Isolierkappe, die den Kurzschließerkolben 6 hält.

Die Erfindung spezifiziert sich vorrangig auf den Einsatz als zentrales Schutzorgan in ortsveränderlichen und stationären Energieverteilungsanlagen, sowohl in Punktverteiler z.B. Hauptverteiler, als auch in Linienverteilem z.B. Schienenverteiler in der Nieder-, Mittel-, und Hochspannungstechnik. Die Erfindung kann auch als dezentrales Schutzorgan z.B. in Batterie-, Notstrom-, Kompensations-, und Bahnanlagen eingesetzt werden.

Das Grundprinzip beruht darauf, daß ein Gasgenerator, der durch einen definierten Zündstrom aktiviert wird, in sehr kurzer Zeit ein definiertes Gasvolumen liefert. Der Raum, in dem sich das Gasvolumen entwickelt ist ausreichend dicht und fest, so daß sich ein Druck bis 900 bar aufbaut. Der Druck wird als Antrieb für einen Schließvorgang genutzt. Die Leiter sind für einen Kurzschlußstrom von über 100kA über einen Zeitraum von mindestens 500 ms ausgelegt.

### Liste der Bezugszeichen

Zentrierelement 1
Verbindungsschiene 2
Anschlußschiene 3
Isoliermembran 4
Kurzschließerkolben 5
Druckelement 6
Halteteil 7
Unterteil 9
Haube 10
Hülse 11
Anschlußbohrungen 15
Kurzschließereinheiten 16, 17
Kapselung 18
Einsenkungen 19
Öffnungen 20
Befestigungsflansche 21
Befestigungsbohrungen 22
Kurzschließer 23
Anschlußschienenbohrung 24
Fase 25
Unterteilbohrung 26
Isolierfolie 27
Sollbruchstelle 29
erster Bereich 30
Vorvolumen 31
Aufnahme 32
Haltephase 33
Gewinde 34
zweite Bereich 35
Schraubenverbindungen 36
Durchgangsbohrung 38
Rillen 39
dritter Bereich 40
zylindrischen Bereich 41
konischen Bereich 42
Anschlußschienenfase 43

## Patentansprüche

1. Kurzschließer (23) für eine Störlichtbogen-Schutzvorrichtung zur Verwendung in Anlagen zur Verteilung elektrischer Energie, mit einem Druckelement (6), mit Auschlußschienen (3) und einer Verbindungsschiene (2) und einem von dem Druckelement angetriebenes Kurzschließelement (5) zur elektrischen Verbindung von den Anschlußschienen (3) mit der Verbindungsschiene (2), wobei der Kurzschließer mindestens ein Zentrierelement (1) aus Isoliermaterial zur Zentrierung von der Anschlußschiene (3) mit der Verbindungsschiene (2) aufweist, und das Zentrierelement (1) eine Isoliermembran (4) aufweist, die bei Zündung des Druckelements (6) von dem Kurzschließelement (5) durchstoßen wird.

2. Kurzschließer nach Anspruch 1, **dadurch gekennzeichnet, daß** zwischen der Anschlußschiene (3) und der Verbindungsschiene (2) eine Isolierfolie (27) angeordnet ist, die ein Folienloch aufweist, das größer als der Durchmesser des Kurzschließelements (5) ist und in das das Zentierelement (1) eingesetzt werden kann.

3. Kurzschließer nach Anspruch 2, **dadurch gekennzeichnet, daß** das Zentrierteil (1) aus einer ringförmigen Hülse (11), die größer als der Durchmesser des Kurzschließerelements (5) ist, besteht, daß das Zentrierelement (1) ein an der Hülse (11) radial nach außen angeformten Isolierkragen aufweist.

4. Kurzschließer nach einem der vorhergehenden Ansprüche, **dadurch gekennzeichnet, daß** das Druckelement ein Gasgenerator (6) ist.

5. Kurzschließer nach einem der vorhergehenden Ansprüche, **dadurch gekennzeichnet, daß** das Kurzschließelement (5) ein Kurzschließerkolben ist.

6. Kurzschließer nach einem der vorhergehenden Ansprüche, **dadurch gekennzeichnet, daß** die Isoliermembrane (4) mit einer Sollbruchstelle (29) versehen ist.

7. Kurzschließer nach einem der vorhergehenden Ansprüche, **dadurch gekennzeichnet, daß** die Anschlußschienen (3) und die Verbindungsschienen (2) eine E-förmige Schienenanordnung bilden.

8. Kurzschließer nach einem der vorhergehenden Ansprüche, **dadurch gekennzeichnet, daß** die Anschlußschienen (3), die Verbindungsschiene (2) und Isolierteile sind zu einem sandwichartigen E-förmigen Paket angeordnet sind.

9. Kurzschließer nach einem der vorhergehenden Ansprüche, **dadurch gekennzeichnet, daß** Kurzschließereinheiten (16 und 17) vorhanden sind, die durch eine Auswerteelektronik angesteuert werden, die mit schnellen Stromund Lichtsensoren zur Störlichtbogenerkennung verbunden ist.

10. Kurzschließer nach einem der vorhergehenden Ansprüche, **dadurch gekennzeichnet, daß** Anschlußschienen (3) im Bereich von Kurzschließereinheiten (16,17) mit einer Anschlußschienenbohrung (24) versehen sind, die eine Fase (25) für das Zentrierelement (1) aufweisen.

## Claims

1. Short-circuiter (23) for an arcing fault protection apparatus for use in systems for distributing electrical power, having a compression element (6), having terminal bars (3) and a connecting bar (2), and a short-circuit element (5), which is driven by the compression element, for the purpose of electrically connecting the terminal bars (3) to the connecting bar (2), in which the short-circuiter has at least one centring element (1) made of insulating material for the purpose of centring the terminal bar (3) with the connecting bar (2), and the centring element (1) has an insulating membrane (4), through which the short-circuit element (5) passes when the compression element (6) is triggered.

2. Short-circuiter according to Claim 1, **characterized in that** arranged between the terminal bar (3) and the connecting bar (2) is an insulating film (27) which has a film hole, which is larger than the diameter of the short-circuit element (5), and in which the centring element (1) can be inserted.

3. Short-circuiter according to Claim 2, **characterized in that** the centring part (1) comprises an annular sleeve (11), which is larger than the diameter of the short-circuit element (5), and **in that** the centring element (1) has an insulating collar, which is integrally formed radially on the outside of the sleeve (11).

4. Short-circuiter according to one of the preceding claims, **characterized in that** the compression element is a gas generator (6).

5. Short-circuiter according to one of the preceding claims, **characterized in that** the short-circuit element (5) is a short-circuiter plunger.

6. Short-circuiter according to one of the preceding claims, **characterized in that** the insulating membrane (4) is provided with a weak point (29).

7. Short-circuiter according to one of the preceding claims, **characterized in that** the terminal bars (3) and the connecting bars (2) form an E-shaped bar arrangement.

8. Short-circuiter according to one of the preceding claims, **characterized in that** the terminal bars (3), the connecting bar (2) and the insulating parts are arranged so as to form an E-shaped stack in the form of a sandwich.

9. Short-circuiter according to one of the preceding claims, **characterized in that** short-circuiter units (16 and 17) are provided which are driven by evaluation electronics which are connected to high-speed current and light sensors for the purpose of detecting an arcing fault.

10. Short-circuiter according to one of the preceding claims, **characterized in that** terminal bars (3) are provided in the region of short-circuiter units (16, 17) with a terminal bar hole (24), and have a bevel (25) for the centring element (1).

## Revendications

1. Court-circuiteur (23) pour un dispositif de protection contre les arcs de lumière parasitaire, destiné à être utilisé dans des installations pour la distribution de l'énergie électrique, avec un élément sous pression (6) avec des rails de connexion (3) et un rail de raccord (2) et un élément court-circuiteur (5) entraîné par l'élément sous pression, pour la liaison électrique des rails de connexion (3) avec le rail de raccord (2), le court-circuiteur étant muni d'au moins un élément de centrage (1) en matériau isolant pour le centrage du rail de connexion (3) avec le rail de raccord (2) et l'élément de centrage (1) étant muni d'une membrane isolante (4), qui lors de l'allumage de l'élément sous pression (6) est traversée par l'élément court-circuiteur (5).

2. Court-circuiteur selon la revendication 1, **caractérisé en ce qu'**un film isolant (27) muni d'un trou de film qui est plus grand que le diamètre de l'élément court-circuiteur (5) et dans lequel l'élément de centrage (1) peut être inséré, est disposé entre le rail de connexion (3) et le rail de raccord (2).

3. Court-circuiteur selon la revendication 2, **caractérisé en ce que** l'élément de centrage (1) est constitué d'une douille annulaire (11) qui est plus grande que le diamètre du piston court-circuiteur (5), **en ce que** l'élément de centrage (1) est muni d'une collerette isolante, moulée en direction radiale vers l'extérieur sur la douille (11).

4. Court-circuiteur selon l'une quelconque des revendications précédentes, **caractérisé en ce que** l'élément sous pression est un générateur de gaz (6).

5. Court-circuiteur selon l'une quelconque des revendications précédentes, **caractérisé en ce que** l'élément court-circuiteur (5) est un piston court-circuiteur.

6. Court-circuiteur selon l'une quelconque des revendications précédentes, **caractérisé en ce que** la membrane isolante (4) est munie d'un point de rupture théorique (29).

7. Court-circuiteur selon l'une quelconque des revendications précédentes, **caractérisé en ce que** les rails de connexion (3) et les rails de raccord (2) forment une configuration de rails en forme de E.

8. Court-circuiteur selon l'une quelconque des revendications précédentes, **caractérisé en ce que** les rails de connexion (3), le rail de raccord (2) et des éléments isolants sont disposés en un paquet du type d'un sandwich en forme de E.

9. Court-circuiteur selon l'une quelconque des revendications précédentes, **caractérisé en ce que** des unités de court-circuitage (16 et 17), pilotées par un système électronique d'évaluation sont présentes, lequel est relié avec des capteurs de courant et des capteurs lumineux, pour l'identification des arcs de lumière parasitaire.

10. Court-circuiteur selon l'une quelconque des revendications précédentes, **caractérisé en ce que** dans la zone d'unités de court-circuiteurs (16, 17), les rails de connexion (3) sont munis d'un perçage de rail de connexion (24), présentant une phase (25) pour l'élément de centrage (1).
